# FASCICULE DE BREVET EUROPEEN

(11) **EP 3 752 767 B1**
(45) Date de publication et mention de la délivrance du brevet: **26.10.2022**
(21) Numéro de dépôt: 19705764.9
(22) Date de dépôt: 18.02.2019
(51) Int. Cl.: F21S 43/20, F21S 43/14, G02F 1/13357

(54) **FEU DE SIGNALISATION COMPACT À AFFICHAGE DE PICTOGRAMME**
KOMPAKTES SIGNALLICHT MIT PIKTOGRAMMANZEIGE
COMPACT SIGNALLING LIGHT WITH PICTOGRAM DISPLAY

(30) Priorité: 16.02.2018 FR 1851331
(43) Date de publication de la demande: 23.12.2020
(73) Titulaire: Valeo Vision, 93012 Bobigny Cedex (FR)
(72) Inventeur: DUBOSC, Christophe, 93012 BOBIGNY (FR); PETIT, Julia, 93012 BOBIGNY Cedex (FR); DENG, Xinyu, 93012 BOBIGNY Cedex (FR)
(74) Mandataire: Valeo Visibility
(86) Numéro de dépôt international: PCT/EP2019/053990
(87) Numéro de publication internationale: WO 2019/158759

(56) Documents cités:
- EP-A1- 2 503 222
- WO-A2-2005/067570
- WO-A2-2006/125174
- DE-A1-102011 119 558
- DE-A1-102015 115 128
- DE-A1-102016 119 170
- US-A1- 2004 062 040
- US-A1- 2009 040 789
- US-A1- 2011 156 588
- US-A1- 2011 252 675
- US-B1- 9 616 823

## Description

L'invention a trait au domaine de la signalisation lumineuse, plus particulièrement de la signalisation lumineuse pour véhicule automobile.

Le document de brevet publié sous le numéro FR 3 026 689 A1 divulgue un dispositif de signalisation lumineuse, en l'occurrence un feu arrière, pour véhicule automobile, configuré pour afficher un pictogramme sur une zone d'un écran d'affichage. Le pictogramme est produit par un premier module lumineux pouvant comprendre un microsystème électromécanique à matrice de miroirs apte à être commandé et produire différents pictogrammes. Selon une variante, le premier module peut être un écran à cristaux liquides (LCD). Le dispositif peut également comprendre un deuxième module lumineux configuré pour éclairer une autre zone de l'écran d'affichage, distincte de la zone affichant le pictogramme. Un tel dispositif est intéressant en ce qu'il permet d'afficher des pictogrammes sur la surface lumineuse d'un feu de signalisation, en l'occurrence un feu arrière de véhicule automobile. US 2011/156588 A1 et US 9 616 823 B1 décrivent des modules de signalisation lumineuse connus.

L'intégration d'un tel dispositif dans un véhicule automobile n'est pas nécessairement sans poser des problèmes d'encombrement. En effet, au niveau de la carrosserie des véhicules, les emplacements logeant les feux arrière présente souvent un volume limité, et plus particulièrement encore une paroi arrière (par rapport au feu) qui est inclinée par rapport à une direction perpendiculaire à l'axe longitudinal du véhicule, imposant alors une géométrie complexe au feu. Or un feu tel que celui mentionné ci-avant requiert un rétroéclairage pour l'écran LCD et, par ailleurs, il est souhaitable, voire nécessaire en fonction de la règlementation en vigueur, d'avoir une luminance suffisante et homogène sur la surface extérieure éclairée du feu. Or le fait d'incliner l'écran LCD et/ou le panneau de rétroéclairage par rapport à une direction perpendiculaire à l'axe longitudinal du véhicule est défavorable à l'homogénéité de la luminance. De plus, pour la plupart des fonctions de signalisation, comme les fonctions de lanterne, indicateur de direction et stop, il est souhaitable pour répondre à la réglementation en vigueur que le maximum de l'intensité émis soit orienté selon l'axe longitudinal du véhicule, ce qui n'est pas le cas lorsque l'écran LCD et le rétroéclairage sont inclinés.

L'invention a pour objectif de proposer une solution à au moins un des problèmes de l'art antérieur susmentionné. Plus spécifiquement, l'invention a pour objectif de permettre l'intégration d'un module lumineux apte à produire des images lumineuses au moyen d'un écran LCD dans un logement exigu et de forme non régulière, tout en assurant une luminance homogène et présentant avantageusement un maximum suivant une direction proche de l'axe longitudinal du véhicule, et ce de manière simple et économique.

L'invention a pour objet un module de signalisation lumineuse pour véhicule, comprenant un imageur ; un panneau de rétroéclairage de l'imageur, avec une platine et des sources lumineuses disposées sur la platine ; l'imageur étant configuré pour former au moins une image lumineuse suivant un axe optique correspondant à l'axe longitudinal du véhicule ; remarquable en ce qu'au moins un de l'imageur et du panneau de rétroéclairage est incliné par rapport à une direction perpendiculaire à l'axe optique ; et le panneau de rétroéclairage est configuré pour éclairer l'écran avec une luminance non homogène apte à compenser au moins en partie une non-homogénéité de luminance de l'image lumineuse produite résultant de l'inclinaison de l'imageur et/ou du panneau de rétroéclairage.

L'imageur et/ou le panneau de rétroéclairage sont avantageusement généralement plans. Au sens de l'invention, l'imageur est un dispositif permettant de générer plusieurs images différentes, avantageusement dynamiquement. L'imageur est avantageusement un écran à cristaux liquides.

Les sources lumineuses sont avantageusement du type diode à électroluminescence. Le nombre de sources lumineuses est avantageusement supérieur ou égal à 9, plus avantageusement supérieur ou égal à 12. Elles peuvent disposées en rangées et en lignes, en nid d'abeille, en quinconce ou selon toute autre disposition. La platine est avantageusement un circuit imprimé.

La ou les images lumineuses produites par l'imageur est/sont avantageusement un ou des pictogrammes, notamment parmi la liste suivante : symbole indiquant un danger, symbole montrant une piéton traversant la route, symbole représentant un véhicule électrique en recharge, symbole représentant une porte sur le point de s'ouvrir, etc.

Selon l'invention, le module comprend une unité d'alimentation électrique des sources lumineuses, configurée pour alimenter lesdites sources de manière non-homogène de façon à réaliser en partie la non-homogénéité de luminance du panneau de rétroéclairage.

Selon un mode avantageux de l'invention, les sources lumineuses sont disposées de manière non-homogène sur la platine, réalisant partie la non-homogénéité de luminance du panneau de rétroéclairage.

Selon un mode avantageux de l'invention, l'imageur et le panneau de rétroéclairage sont inclinés l'un par rapport à l'autre d'un angle supérieur à 10° et/ou inférieur à 60°. Selon un mode avantageux de l'invention, la non-homogénéité de luminance du panneau de rétroéclairage compense totalement la non-homogénéité de luminance de l'image lumineuse produite résultant de l'inclinaison relative entre l'imageur et le panneau de rétroéclairage.

Selon un mode avantageux de l'invention, l'imageur est incliné par rapport à la direction perpendiculaire à l'axe optique et le panneau de rétroéclairage est moins incliné par rapport à ladite direction que ledit imageur. Cela permet de rapprocher la direction principale de la lumière émise par le panneau de rétroéclairage de l'axe optique.

Selon un mode avantageux de l'invention, le module comprend, en outre, un écran diffusant disposé optiquement entre le panneau de rétroéclairage et l'imageur. Selon un mode avantageux de l'invention, l'écran diffusant présente un caractère diffusant non homogène apte à compenser au moins en partie la non-homogénéité de luminance de l'image lumineuse produite.

Selon un mode avantageux de l'invention, l'écran diffusant est un diffuseur optique diffractif, préférentiellement elliptique.

Selon l'invention, le panneau de rétroéclairage est incliné par rapport à une direction perpendiculaire à l'axe optique, et le module comprend, en outre, un écran déviant disposé optiquement entre le panneau de rétroéclairage et l'imageur, ledit écran ayant des propriétés de déviation de la lumière émise par le panneau de rétroéclairage de manière à rapprocher la direction principale de ladite lumière de l'axe optique. L'écran comprend des prismes assurant la déviation de la lumière.

Selon un mode avantageux de l'invention, ledit module comprend, en outre, des parois diffusantes délimitant un volume entre le panneau de rétroéclairage et l'écran déviant.

Selon un mode avantageux de l'invention, les sources lumineuses sont du type monochromatique.

Selon un mode avantageux de l'invention, les sources lumineuses sont du type bicolore à deux composants.

L'invention a également pour objet un dispositif de signalisation lumineuse pour véhicule automobile, comprenant: un boîtier formant une cavité ; une glace refermant une ouverture du boîtier ; au moins un module lumineux logé dans la cavité ; remarquable en ce que le ou au moins un des modules est selon l'invention, l'imageur étant disposé en face d'une surface intérieure de la glace.

Selon un mode avantageux de l'invention, la glace forme une ou plusieurs lentilles.

Les mesures de l'invention sont intéressantes en ce qu'elles permettent de réaliser un module lumineux compact et produisant des pictogrammes avec une luminance homogène. Plus spécifiquement, le module lumineux est particulièrement adapté à être logé suivant des contraintes sévères d'orientation de l'imageur et du panneau de rétroéclairage, tout en assurant une luminance homogène. En effet, afin d'assurer une bonne visibilité des pictogrammes lumineux, il est important que l'imageur soit le plus proche possible de la glace du dispositif lumineux. Or cette glace présente souvent un profil galbé avec une orientation moyenne qui est inclinée par rapport à la perpendiculaire à l'axe longitudinal du véhicule. Il est par conséquent utile, de ce point de vue-là, que l'imageur présente une certaine inclinaison. Les mesures de l'invention permettent de compenser les inconvénients relatifs à cela ainsi qu'à l'inclinaison relative entre l'imageur et le panneau de rétroéclairage imposée par l'exiguïté et la forme contraignante du logement. Plus spécifiquement, l'invention permet d'utiliser des panneaux de rétroéclairage généralement plans et pouvant, par des mesures simples et économiques, compenser le défaut d'homogénéité provoqué par les différences de trajet de lumière entre ledit panneau et l'imageur.

D'autres caractéristiques et avantages de la présente invention seront mieux compris à l'aide de la description et des dessins parmi lesquels :
- La figure 1 illustre les feux arrière d'un véhicule, conformes à l'invention ;
- La figure 2 est une vue schématique en coupe horizontale du feu arrière gauche de la figure 1 ;
- La figure 3 est une représentation schématique en plan du panneau de rétroéclairage du feu des figures 1 et 2 ;

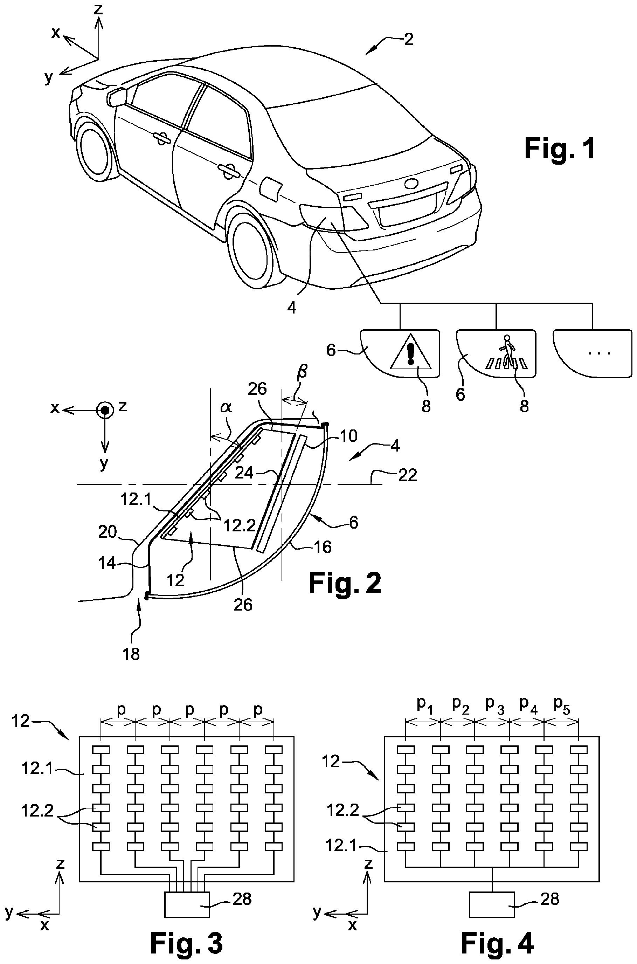

- La figure 3 est une représentation schématique en plan du panneau de rétroéclairage du feu des figures 1 et 2, suivant une variante.

La figure 1 illustre un véhicule 2 équipé de deux feux arrière 4 comprenant, chacun, un module de signalisation conforme à l'invention. Les feux arrière 4 sont configurés pour former sur leur surface extérieure 6 une pluralité d'images lumineuses formant des pictogrammes 8. Ces pictogrammes peuvent notamment indiquer aux personnes situées à l'arrière du véhicule 2 certaines informations telles que la présence d'un danger ou encore le fait qu'un piéton est en train de traverser la route à l'avant du véhicule en question. Il est entendu que les pictogrammes peuvent prendre d'autres formes que celles illustrées et renseigner sur d'autres situations que celles illustrées.

La figure 2 est une vue schématique en coupe horizontale du feu arrière gauche de la figure 1, étant entendu que le feu arrière droit est symétrique au feu arrière gauche.

On peut observer à la figure 2 que le feu 4 comprend un module lumineux consistant essentiellement en un imageur 10 et un panneau de rétroéclairage 12. L'imageur est un écran à cristaux liquides couramment désigné par l'acronyme LCD (« Liquid Crystal Display »). Le panneau de rétroéclairage 12 comprend essentiellement une platine 12.1, avantageusement généralement plane, et des sources lumineuses 12.2 disposées sur la platine 12.1. Ces sources lumineuses 12.2 sont avantageusement du type diode à électroluminescence, couramment désignées par l'acronyme LED (« Light Emitting Diode »). Elles sont réparties de manière homogène ou non sur la platine comme cela va être décrit en relation avec les figures 3 et 4. En outre, l'imageur 10 est relié à un dispositif de commande (non représenté) comportant une unité de mémoire avec des images, en particulier les images des pictogrammes, à afficher et transmettant à l'imageur l'image à afficher à un moment donné. Le dispositif de commande peut être logé dans le feu 4 ou ailleurs sur le véhicule sur lequel le feu 4 est monté.

Toujours à la figure 2, on peut observer que le module lumineux est logé dans un boîtier 14. Ce dernier présente une ouverture recouverte par la glace 16. Le feu arrière 4, plus précisément son boîtier 14, est disposé dans un logement 18 de la carrosserie du véhicule, délimité par la paroi 20. Pour des raisons liées à la construction de la carrosserie, ce logement 18 est potentiellement de taille réduite et la paroi 20 le délimitant est souvent inclinée par rapport à une direction perpendiculaire à l'axe optique 22 du module lumineux, ledit axe étant parallèle à l'axe longitudinal du véhicule. Le panneau de rétroéclairage 12 est alors disposé avantageusement au plus près de la paroi 20 et par conséquent forme un angle α avec la perpendiculaire à l'axe optique 22 et la direction longitudinale du véhicule. Similairement, l'écran imageur 10 peut également former un angle β avec la perpendiculaire à l'axe optique 22 et la direction longitudinale du véhicule, notamment de manière à être au plus près de la glace 16 présentant un galbe et dont l'orientation moyenne forme également un angle avec la perpendiculaire l'axe optique et la direction longitudinale du véhicule.

Dans le cas où l'angle α est inférieur à l'angle β, le maximum d'intensité lumineuse émis par la fonction de signalisation est plus proche de l'axe longitudinal du véhicule que si l'écran avait été parallèle au rétroéclairage, ce qui est plus favorable du point de vue de la réglementation.

Encore en référence à la figure 2, on observe que le module lumineux peut également comprendre un diffuseur optique sous la forme d'un écran diffusant 24 disposé optiquement entre le panneau de rétroéclairage 12 et l'imageur 10, plus particulièrement le long de la face arrière de l'imageur 10. Un diffuseur optique comprend une surface non lumineuse par elle-même et qui diffuse tout ou partie du flux qu'elle reçoit. Une telle caractéristique peut être obtenue par la présence d'un grand nombre de micro-aspérités. Le module peut également comprendre des parois diffusantes 26 entourant le volume séparant l'imageur 10 ou, le cas échéant, l'écran diffusant 24, du panneau de rétroéclairage 12. Ces parois servent à éviter des pertes de lumière tout en évitant des réflexions susceptibles de perturber la distribution de lumière vers l'imageur 10.

Selon l'invention, l'écran 24 est un écran apte à dévier la lumière émise par le panneau de rétroéclairage 12 de manière à rapprocher la direction principale de ladite lumière de l'axe optique. A cet effet, l'écran 24 comprend des prismes assurant la déviation en question. Un tel écran est particulièrement utile lorsque le panneau de rétroéclairage 12 est incliné par rapport à la direction perpendiculaire à l'axe optique.

II est souhaitable que la luminance des pictogrammes lumineux produits au niveau de la surface de sortie 6 du feu arrière 4 soit constante ou du moins ne présente pas de manque substantiel d'homogénéité. La luminance est une grandeur correspondant à la sensation visuelle de luminosité d'une surface. La luminance est la puissance de la lumière visible passant ou étant émise en un point d'une surface et dans une direction donnée, par unité de surface et par unité d'angle solide. Or le fait que l'imageur 10 puisse former un angle β non nul par rapport à la perpendiculaire à l'axe optique 22 et aussi le fait que le panneau de rétroéclairage 12 puisse former un angle α non nul par rapport à la perpendiculaire à l'axe optique 22 a pour effet que la luminance suivant l'axe optique peut présenter un manque d'homogénéité notoire. En effet, ces inclinaisons ont pour effet de causer des trajets de longueurs différentes pour la lumière, depuis les sources lumineuses jusqu'à l'imageur 10 et la surface de sortie 6 du feu 4. Ces variations de trajets ont pour effet de varier la densité lumineuse le long de l'étendue de l'imageur 10 et de la surface de sortie 6, plus particulièrement encore de varier la puissance de la lumière émise par unité de surface et par unité d'angle solide dans la direction de l'axe optique 22.

Afin de corriger ce manque d'homogénéité, la luminance du panneau de rétroéclairage 12 présente une luminance non-homogène. Celle-ci est apte à compenser le défaut d'homogénéité provoqué par les deux inclinaisons susmentionnées. En l'occurrence, en référence à la figure 2, la luminance du panneau de rétroéclairage 12 est plus grande vers l'extérieur du véhicule, c'est-à-dire suivant l'axe y, afin de compenser la dilution de lumière résultant du plus grand trajet entre ledit panneau 12 et l'imageur 10, résultant de l'inclinaison relative α-β entre les deux. A cet effet, les sources lumineuses 12.2 du panneau de rétroéclairage 12 peuvent être alimentées avec des puissances différentes, comme illustré à la figure 3, et/ou ces sources lumineuses peuvent être réparties de manière non homogène sur la platine 12.1, comme illustré à la figure 4.

La figure 3 illustre le panneau de rétroéclairage 12 de la figure 2, raccordé à une unité d'alimentation 28 des sources lumineuses 12.2, configurée pour alimenter lesdites sources 12.2 avec des puissances électriques différentes. Plus précisément, les sources lumineuses 12.2 sont réparties suivant plusieurs rangées ou colonnes suivant la direction z, ces colonnes étant espacées d'un même pas *p*. Elles sont par conséquent disposées de manière homogène suivant la direction transversale y (en réalité ce n'est pas tout-à-fait la direction y, compte tendu de l'angle d'inclinaison α du panneau). Par contre, les sources lumineuses de chacune des colonnes ou rangées est reliée électriquement de manière individuelle à l'unité d'alimentation 28. De la sorte, les sources lumineuses de chacune de rangées peuvent être alimentées différemment de celles des autres rangées. La luminance du panneau de rétroéclairage 12 peut alors présenter un gradient suivant la direction transversale, ledit gradient compensant au moins une des inclinaisons susmentionnées.

La figure 4 illustre le panneau de rétroéclairage 12 de la figure 2, suivant une variante à la figure 3. Les sources lumineuses 12.2 sont ici disposées suivant des rangées (suivant la direction z) espacées les unes des autres d'un pas *pₙ* variable d'une rangée à l'autre, où en l'occurrence *p₁ < p₂ < p₃ < p₄ < p₅.* Dans un tel agencement non-homogène, les sources lumineuses 12.2 peuvent être toutes alimentées avec la même puissance électrique via l'unité d'alimentation 28. Similairement au panneau de rétroéclairage de la figure 3, le panneau de la figure 4 présente une luminance avec un gradient suivant la direction transversale, où ledit gradient compense au moins une des inclinaisons du panneau de rétroéclairage et de l'imageur par rapport à la perpendiculaire à l'axe optique.

Il est à noter que les exemples de réalisation du panneau de rétroéclairage aux figures 3 et 4 sont purement exemplatifs, étant entendu que des non-homogénéités plus complexes peuvent être considérées. Il est aussi à noter qu'une combinaison d'alimentation différenciée des sources lumineuses, telle qu'à la figure 3, avec une répartition non-homogène des sources lumineuses, telle qu'à la figure 4, peut être envisagée.

Il est également à noter que l'écran diffusant 24 illustré à la figure 2 peut également participer à la compensation de la non-homogénéité de luminance provoquée par la ou les inclinaisons susmentionnées. A cet effet, l'écran diffusant peut, similairement à la luminance du panneau de rétroéclairage, présenter une non-homogénéité. Il peut notamment s'agir d'un diffuseur optique en matériau opalescent, ou encore un diffuseur diffractif ou holographique.

## Revendications

1. Module de signalisation lumineuse pour véhicule, comprenant :
- un imageur (10) ;
- un panneau de rétroéclairage (12) de l'imageur (10), avec une platine (12.1) et des sources lumineuses (12.2) disposées sur la platine (12.1) ;
l'imageur (10) étant configuré pour former au moins une image lumineuse suivant un axe optique (22) correspondant à l'axe longitudinal du véhicule ;
au moins un de l'imageur (10) et du panneau de rétroéclairage (12) est incliné (α, β) par rapport à une direction perpendiculaire à l'axe optique ; et le panneau de rétroéclairage (12) est configuré pour éclairer l'imageur (10) avec une luminance non homogène apte à compenser au moins en partie une non-homogénéité de luminance de l'image lumineuse produite résultant de l'inclinaison relative entre l'imageur (10) et le du panneau de rétroéclairage (12) **caractérisé en ce que** ledit module comprend une unité d'alimentation électrique (28) des sources lumineuses (12.2), configurée pour alimenter lesdites sources de manière non-homogènes de façon à réaliser en partie la non-homogénéité de luminance du panneau de rétroéclairage (12) et **en ce que** le panneau de rétroéclairage (12) est incliné (α) par rapport à une direction perpendiculaire à l'axe optique, le module comprenant, en outre, un écran déviant (24) disposé optiquement entre le panneau de rétroéclairage (12) et l'imageur (10), ledit écran comprenant des prismes assurant la déviation de la lumière émise par le panneau de rétroéclairage (12) de manière à rapprocher la direction principale de ladite lumière de l'axe optique.

2. Module selon la revendication 1, **caractérisé en ce que** les sources lumineuses (12.2) sont disposées de manière non-homogène sur la platine (12.1), réalisant au moins en partie la non-homogénéité de luminance du panneau de rétroéclairage (12).

3. Module selon l'une des revendications 1 à 2, **caractérisé en ce que** l'imageur (10) et le panneau de rétroéclairage (12) sont inclinés (α-β) l'un par rapport à l'autre d'un angle supérieur à 10° et/ou inférieur à 60°.

4. Module selon la revendication 1, **caractérisé en ce que** la non-homogénéité de luminance du panneau de rétroéclairage (12) compense totalement la non-homogénéité de luminance de l'image lumineuse produite résultant de l'inclinaison relative (α-β) entre l'imageur (10) et le panneau de rétroéclairage (12).

5. Module selon l'une des revendications 1 à 4, **caractérisé en ce que** l'imageur (10) est incliné (β) par rapport à la direction perpendiculaire à l'axe optique et le panneau de rétroéclairage (12) est moins incliné (α) par rapport à ladite direction que ledit imageur.

6. Module selon l'une des revendications 1 à 5, **caractérisé en ce que** ledit module comprend, en outre, des parois diffusantes (26) délimitant un volume entre le panneau de rétroéclairage (12) et l'écran déviant (24).

7. Module selon l'une des revendications 1 à 6, **caractérisé en ce que** les sources lumineuses (12.2) sont du type monochromatique.

8. Module selon l'une des revendications 1 à 6, **caractérisé en ce que** les sources lumineuses (12.2) sont du type bicolore à deux composants.

9. Dispositif de signalisation lumineuse (4) pour véhicule automobile, comprenant :
- un boîtier (14) formant une cavité ;
- une glace (16) refermant une ouverture du boîtier ;
- au moins un module lumineux logé dans la cavité ;
**caractérisé en ce que**
le ou au moins un des modules est selon l'une des revendications 1 à 8, l'imageur (10) étant en disposé en face d'une surface intérieure de la glace.

10. Dispositif (4) selon la revendication 9, **caractérisé en ce que** la glace (16) forme une ou plusieurs lentilles

## Patentansprüche

1. Lichtsignalisierungsmodul für ein Fahrzeug, welches umfasst:
- einen Bildgeber (10);
- eine Hintergrundbeleuchtungsplatte (12) des Bildgebers (10) mit einer Platine (12.1) und auf der Platine (12.1) angeordneten Lichtquellen (12.2);
wobei der Bildgeber (10) dafür ausgelegt ist, wenigstens ein Leuchtbild entlang einer optischen Achse (22), die der Längsachse des Fahrzeugs entspricht, zu bilden; wobei der Bildgeber (10) und/oder die Hintergrundbeleuchtungsplatte (12) in Bezug auf eine zur optischen Achse senkrechte Richtung geneigt sind (α, β); und die Hintergrundbeleuchtungsplatte (12) dafür ausgelegt ist, den Bildgeber (10) mit einer nicht homogenen Leuchtdichte zu beleuchten, die geeignet ist, eine Nichthomogenität der Leuchtdichte des erzeugten Leuchtbildes, die aus der relativen Neigung zwischen dem Bildgeber (10) und der Hintergrundbeleuchtungsplatte (12) resultiert, wenigstens teilweise auszugleichen, **dadurch gekennzeichnet, dass** das Modul eine Einheit zur Stromversorgung (28) der Lichtquellen (12.2) umfasst, die dafür ausgelegt ist, diese Quellen auf eine nicht homogene Weise zu versorgen, um die Nichthomogenität der Leuchtdichte der Hintergrundbeleuchtungsplatte (12) teilweise zu bewirken, und
dadurch, dass die Hintergrundbeleuchtungsplatte (12) in Bezug auf eine zur optischen Achse senkrechte Richtung geneigt ist (α), wobei das Modul außerdem einen Ablenkschirm (24) umfasst, der optisch zwischen der Hintergrundbeleuchtungsplatte (12) und dem Bildgeber (10) angeordnet ist, wobei dieser Schirm Prismen umfasst, welche die Ablenkung des von der Hintergrundbeleuchtungsplatte (12) ausgesendeten Lichts sicherstellen, um so die Hauptrichtung dieses Lichts an die optische Achse anzunähern.

2. Modul nach Anspruch 1, **dadurch gekennzeichnet, dass** die Lichtquellen (12.2) auf eine nicht homogene Weise auf der Platine (12.1) angeordnet sind, wobei sie wenigstens teilweise die Nichthomogenität der Leuchtdichte der Hintergrundbeleuchtungsplatte (12) bewirken.

3. Modul nach einem der Ansprüche 1 bis 2, **dadurch gekennzeichnet, dass** der Bildgeber (10) und die Hintergrundbeleuchtungsplatte (12) relativ zueinander um einen Winkel (α-β) geneigt sind, der größer als 10° und/oder kleiner als 60° ist.

4. Modul nach Anspruch 1, **dadurch gekennzeichnet, dass** die Nichthomogenität der Leuchtdichte der Hintergrundbeleuchtungsplatte (12) die Nichthomogenität der Leuchtdichte des erzeugten Leuchtbildes, die aus der relativen Neigung (α-β) zwischen dem Bildgeber (10) und der Hintergrundbeleuchtungsplatte (12) resultiert, vollständig ausgleicht.

5. Modul nach einem der Ansprüche 1 bis 4, **dadurch gekennzeichnet, dass** der Bildgeber (10) in Bezug auf die zur optischen Achse senkrechte Richtung geneigt ist (β) und die Hintergrundbeleuchtungsplatte (12) in Bezug auf diese Richtung weniger geneigt ist (α) als der Bildgeber.

6. Modul nach einem der Ansprüche 1 bis 5, **dadurch gekennzeichnet, dass** das Modul außerdem Streuwände (26) umfasst, die ein Volumen zwischen der Hintergrundbeleuchtungsplatte (12) und dem Ablenkschirm (24) begrenzen.

7. Modul nach einem der Ansprüche 1 bis 6, **dadurch gekennzeichnet, dass** die Lichtquellen (12.2) vom monochromatischen Typ sind.

8. Modul nach einem der Ansprüche 1 bis 6, **dadurch gekennzeichnet, dass** die Lichtquellen (12.2) vom zweifarbigen Typ mit zwei Komponenten sind.

9. Lichtsignalisierungsvorrichtung (4) für ein Kraftfahrzeug, welche umfasst:
- ein Gehäuse (14), das einen Hohlraum bildet;
- eine Scheibe (16), die eine Öffnung des Gehäuses umschließt;
- wenigstens ein Lichtmodul, das in dem Hohlraum aufgenommen ist,
**dadurch gekennzeichnet, dass** das oder wenigstens eines der Module ein Modul nach einem der Ansprüche 1 bis 8 ist, wobei der Bildgeber (10) gegenüber einer Innenfläche der Scheibe angeordnet ist.

10. Vorrichtung (4) nach Anspruch 9, **dadurch gekennzeichnet, dass** die Scheibe (16) eine oder mehrere Linsen bildet.

## Claims

1. Luminous vehicle signalling module, comprising:
- an imager (10);
- a backlighting panel (12) of the imager (10), with a carrier (12.1) and light sources (12.2) arranged on the carrier (12.1);
the imager (10) being configured to form at least one luminous image along an optical axis (22) corresponding to the longitudinal axis of the vehicle;
at least one of the imager (10) and of the backlighting panel (12) is inclined (α, β) with respect to a direction perpendicular to the optical axis; and the backlighting panel (12) is configured to illuminate the imager (10) with a non-uniform luminance able to compensate at least in part for a luminance non-uniformity of the produced luminous image resulting from the relative inclination between the imager (10) and the backlighting panel (12) **characterized in that** said module comprises a unit (28) for supplying electrical power to the light sources (12.2), which unit is configured to supply said sources with power non-uniformly, so as to produce in part the luminance non-uniformity of the backlighting panel (12) **and in that** the backlighting panel (12) is inclined (α) with respect to a direction perpendicular to the optical axis, and the module furthermore comprises a deviating screen (24) that is arranged, optically, between the backlighting panel (12) and the imager (10), said screen comprising prisms that ensure the deviation of the light emitted by the backlighting panel (12) such as to bring the main direction of said light closer to the optical axis.

2. Module according to Claim 1, **characterized in that** the light sources (12.2) are arranged non-uniformly over the carrier (12.1), this producing at least in part the luminance non-uniformity of the backlighting panel (12).

3. Module according to one of Claims 1 to 2, **characterized in that** the imager (10) and the backlighting panel (12) are inclined (α-β) with respect to each other by an angle larger than 10° and/or smaller than 60°.

4. Module according to Claim 1, **characterized in that** the luminance non-uniformity of the backlighting panel (12) completely compensates for the luminance non-uniformity of the produced luminous image resulting from the relative inclination (α-β) between the imager (10) and the backlighting panel (12).

5. Module according to one of Claims 1 to 4, **characterized in that** the imager (10) is inclined (β) with respect to the direction perpendicular to the optical axis and the backlighting panel (12) is less inclined (α) with respect to said direction than said imager.

6. Module according to one of Claims 1 to 5, **characterized in that** said module furthermore comprises diffusing walls (26) that bound a volume between the backlighting panel (12) and the deviating screen (24).

7. Module according to one of Claims 1 to 6, **characterized in that** the light sources (12.2) are monochromatic light sources.

8. Module according to one of Claims 1 to 6, **characterized in that** the light sources (12.2) are two-colour, two-component light sources.

9. Luminous motor-vehicle signalling device (4), comprising:
- a casing (14) forming a cavity;
- a cover plate (16) closing an aperture of the casing;
- at least one luminous module housed in the cavity;
**characterized in that**
the or at least one of the modules is according to one of Claims 1 to 8, the imager (10) being arranged facing an interior surface of the cover plate.

10. Device (4) according to Claim 9, **characterized in that** the cover plate (16) forms one or more lenses.
